# EUROPEAN PATENT APPLICATION

(11) **EP 4 725 686 A1**
(43) Date of publication of application: **15.04.2026**
(21) Application number: 24205826.1
(22) Date of filing: 10.10.2024
(51) Int. Cl.: B29D 30/00, B60K 25/10, F03G 7/08

(54) **A VEHICLE WHEEL COMPRISING AN ELECTRICAL POWER GENERATION DEVICE AND A METHOD FOR PRODUCING POWER FROM A VEHICLE WHEEL**

(71) Applicant: Halmeco AB, 442 94 Ytterby (SE)
(72) Inventor: Lindén, Hans, 442 53 Ytterby (SE)
(74) Representative: Zacco Sweden AB

(57) **Abstract**

Vehicle wheel (1) comprising one or more electrical power generation devices (5b) and a method for producing power from a vehicle wheel (1) during movement of a vehicle.

## Description

### TECHNICAL FIELD

The invention relates to a vehicle wheel comprising an electrical power generation device and a method for producing power from a vehicle wheel.

### BACKGROUND ART

Vehicles driving on any surface experiences rolling resistance, sometimes called rolling friction or rolling drag from the force resisting the motion when the wheel rolls on the surface. During driving, wheels deform under the weight of the vehicle. Rolling resistance is at least partly due to that not all the energy needed for deformation of the wheel and surface during movement of the wheel over the surface is recovered when the pressure is removed.

Deformation of the wheels made of elastic materials, the characteristics of the road surface, deformation of the road surface, and movement of material below the surface all contribute to rolling resistance. Further, the wheel diameter and width, the load on the wheel, surface adhesion, sliding, and relative micro-sliding between the surfaces of contact also contribute.

According to the National Academy of Sciences, "A characteristic of a deformable material such that the energy of deformation is greater than the energy of recovery. The rubber compound in a tire exhibits hysteresis. As the tire rotates under the weight of the vehicle, it experiences repeated cycles of deformation and recovery, and it dissipates the hysteresis energy loss as heat. Hysteresis is the main cause of energy loss associated with rolling resistance and is attributed to the viscoelastic characteristics of the rubber". See the publication https://onlinepubs.trb.org/onlinepubs/sr/sr286.pdf.

There is thus a need for improvement within vehicle wheels.

### SUMMARY OF THE INVENTION

An object of the present disclosure is to provide a vehicle wheel comprising an electrical power generation device and a method for producing power from a vehicle wheel that seeks to mitigate, alleviate, or eliminate one or more of the above-identified deficiencies in the art and disadvantages singly or in any combination.

This object is obtained in a first aspect by a vehicle wheel comprising a rim structure onto which rim structure at least one annular loadbearing tread is mounted. At least one power generation device is mounted to the rim structure closer to the rim structure than the loadbearing tread in a radial direction. Each power generation device comprises at least one electrically conducting coil with at least one magnet arranged inside the coil or a piezoelectric element. One or more reciprocating elements are each being connected to a respective power generation device. In a first state, the one or more reciprocating elements extend beyond the annular loadbearing tread in a radial direction. In a second state, the reciprocating elements have moved radially inwards toward the rim structure after coming into contact with the ground during rotation of the vehicle wheel such that the reciprocating elements become at least flush with the annular loadbearing tread. During transition between the first state and the second state and during transition between the second state and the first state respectively, each reciprocating elements moves radially inwards towards the rim structure and moves radially outwards away from the rim structure respectively, such that each power generation device generates electrical power from the radial movement of the reciprocating elements connected thereto causing the at least one magnet or the at least one electrically conducting coil to move relative the other or to compress/decompress the piezoelectric element during the transition between the first state and the second state and/or between the second state and the first state, thereby generating a voltage in the at least one electrically conducting coil or the piezoelectric element.

One advantage with a vehicle wheel according the first aspect that it is possible for the one or more power generation devices in the vehicle wheel to generate an electrical voltage from the radial movement of the reciprocating elements when the vehicle wheel is rotating, i.e. when the vehicle is moving. The hysteresis that a normal vehicle wheel experiences that only causes degradation and generation of heat in the rubber heat can thus be utilised by the vehicle wheel of the application to generate an electrical voltage. Additionally, the rolling resistance of the vehicle wheel according to the application can be reduced by selecting suitable materials.

The voltage generated can be used to power various parts of the vehicle and as an example increase the distance that the vehicle can travel as the voltage generated by the vehicle wheel can be used to reduce the need for electric power from the vehicle's batteries. This leads to a possible reduction of the battery size and thereby a reduction in the total weight of the vehicle. For transport vehicles, this leads to that more cargo can be transported while the vehicle still maintains legal weight limits. A larger voltage can be generated when the vehicle moves at a higher speed, due to the increased speed with which each segment moves radially inwards and from the increased number of movements per second of the central tread segments due to the increased rotational speed of the tire.

A power consumer consuming power generated by a rotating generator causes a constant counteracting electromotive force greater than the input rotating power. The invention aims to take advantage of the relative radial movement between a standard tyre's outer diameter and a rim's outer diameter, e.g. the compression of the standard tyre during driving. The movement back and forth during compression/decompression is not linear but exhibits hysteresis and this is used to generate power by linear movement in the power generation devices of the wheel according to the invention.

The rolling resistance caused by the hysteresis can be used to generate intermittent electric power from a linear radial movement without negatively impacting rolling resistance. The added negative effect besides the hysteresis that is normally present is the electromotive force generated in the power generation devices and the force of the return spring that is compressed. As the electromotive force generated in each power generation device and the mass of the return spring are negligible in relation to the vehicle's weight, the added negative effect does not impact the rolling resistance significantly.

The starting point of the wheel according to the invention is that it provides a tool to increase the desirability for electric vehicles and reduce the number of combustion engine vehicles. This will lead to a reduction of harmful emissions from the vehicle sector. Additionally, using a wheel according to the invention will reduce the rolling resistance for all vehicles that uses pneumatic wheels. All pneumatic tyres are made of a rubber compound and suffer from limited life span through wear and pollution by the release of micro plastic into nature.

Every country has different legislation for maximum weight of transport vehicles. This results in a maximal surface pressure exerted by the wheels on the road. The wheel must at the same time have a sufficient contact surface with the road to ensure safe braking of the vehicle. This surface is at the same time the surface that gives rise to the rolling resistance through hysteresis. The tyre on the wheel must be compressed to obtain the surface needed to achieve optimal braking and acceleration surface. This is especially important on slippery surfaces such as snowy or icy roads or when going uphill or downhill. The required surface depends on the vehicle's weight and velocity and the friction of the tyre. The compression also functions as a kind of suspension to account for the unevenness of the road. To achieve minimal rolling resistance, a minimal contact surface is required. This is normally achieved with hard materials such as in train wheels. The wheel according to the invention provides the possibility to create a good balance between a small contact surface and good braking characteristics. This is achieved by the wheel comprising at least one loadbearing tread having a small contact surface, either through the use of a hard material or a high tyre pressure and a power generation tread comprising a reciprocating element having a larger contact surface due to it being of a softer material than the loadbearing tread. The softer material has through its higher friction a compensatory effect on the total braking capacity of the vehicle.

The invention is useful for all vehicles in need of reducing its rolling resistance as well as requiring electric power, such as any kind of electric vehicle as well as vehicles with combustion engines that require electrical power to supply to its peripheral electrical equipment.

It has been shown that the rolling resistance is approximately 20% of a car's energy (fuel) consumption.

For a truck or tractor, 90 - 95 % of the rolling resistance stems from the deformation/hysteresis in the tyre, 3 - 4 % from air resistance during the wheel's rotation and 2 - 5 % from friction between the wheel and the road.

Everly litre of diesel or petrol that is combusted creates approximately 2,7 kg carbon dioxide (CO2). The energy content of one litre diesel is 9,9633kWh or 12,4541 kWh/kg (one litre of diesel weighs 0,75kg). One kg of a lithium battery contains approximately 0,3 - 0,4 kWh leading to a factor of 36 to 1 kWh/kg between diesel and battery weight. The efficiency of a diesel engine is approximately 53%, while the efficiency for an electric motor is approximately 97%.

An example vehicle weighs 1000 kg (excluding fuel tank or battery weight). For a diesel vehicle with a fuel tank volume of 100 litre (75 kg), this amounts to 996,33 kWh. An electric vehicle having the same energy content in its battery requires a battery weighing 2700 kg (36 * 75 = 2700) equalling 0,369 kWh/kg for the battery. This results in that an electric vehicle having the same energy content as the diesel vehicle with 100 litre fuel tank weighs 1188 kg (2700 * 44 % (difference in efficiency) more than the diesel vehicle.

For heavier vehicles, the difference in weight is even greater and the total capacity for cargo will be reduced due to the upper limit of the total weight of the vehicle.

To further illustrate the difference, a diesel engine with an efficiency of 53 % uses 528,05 kWh of the available energy content for propulsion. An electric battery with the same energy density as above (0,369 kWh/kg) coupled to an electric engine with an efficiency of 97% would require a battery weighing 1475 kg for the same amount of energy to be used for propulsion.

In the most general example, the reciprocating elements can take any shape that protrude out of the annular loadbearing tread that can be connected to a power generation device, such as rods, stubs etc, and that, when encountering the road's surface, will move radially inwards towards the rim structure causing the at least one magnet or the at least one electrically conducting coil to move relative the other in the power generation devices. When the reciprocating elements lose contact with the road, it is free to move radially outwards, again causing the at least one magnet or the at least one electrically conducting coil to move relative the other. In this way, voltage can be generated effectively from the movement of the vehicle wheel. Alternatively, a piezoelectric element can be made to compress/decompress from the movements of the reciprocating elements.

Onto the rim structure, at least one annular power generation tread comprising a plurality of tread segments arranged to be movable in a radial direction relative the rim structure may be mounted. The annular power generation tread is arranged beside the annular loadbearing tread in an axial direction of the vehicle wheel. The tread segments of the annular power generation tread are each connected to the respective electrical power generation devices arranged in the rim structure and extend beyond the annular loadbearing tread in a radial direction. In another example, the reciprocating elements are tread segments arranged to be movable in a radial direction relative the rim structure. The tread segments have a larger surface area than the rods or stubs of the general example and can thereby assist in providing traction with the road when braking and accelerating.

The vehicle wheel may comprise at least one outer annular loadbearing tread, at least one inner annular loadbearing tread and at least one central annular power generation tread, where the at least one central annular power generation tread is mounted between the at least one outer annular loadbearing tread and the at least one inner annular loadbearing tread in an axial direction of the vehicle wheel. In a further example, the vehicle wheel comprises two annular loadbearing treads arranged on either side axially relative one central annular power generation tread. This will have the advantage that the loadbearing treads are arranged symmetrically relative the central annular power generation tread and will wear more evenly.

The at least one electrically conducting coil or the at least one magnet arranged inside the coil of each power generation device may be resiliently attached to the rim structure. As the power generation device to which the central tread segments are attached, are resiliently attached to the rim structure, the central tread segments do not need to rely on centripetal force alone for its radial movement outwards. By selecting a suitable resilient member, the speed of the outward movement of the central tread segments can be controlled. This will assist in returning the reciprocating elements to the first state as soon as the reciprocating elements loses contact with the road.

The power generation devices may be electrically connected to a power consumer in the vehicle wheel and/or in the vehicle on which the vehicle wheel is mounted. In principle, any electrical equipment in the vehicle can be powered. The power consumer in the vehicle wheel may be a compressor allowing for fast regulation of the pressure in a pneumatic tyre to control the contact area with the road and thereby the rolling resistance.

The power consumer in the vehicle may additionally or alternatively be an electric motor and/or an electric battery. In this way, the voltage generated by the vehicle wheel can be used to power various systems of the vehicle wheel and/or vehicle. Additionally, sensors in the wheel or the vehicle such as a load sensor enabling measurement of vehicle velocity and/or axle load of the vehicle or a temperature sensor measuring the temperature of the road can be powered.

The tread segments of the annular power generation tread may be removably attached to the power generation device. In this way, it easy to remove worn or damaged tread segments if/when needed. The removed tread segments can be recycled into new segments.

Each annular loadbearing tread may be a pneumatic tyre mounted to the rim structure. Alternatively, each annular loadbearing tread may comprise loadbearing tread segments, wherein each one of the loadbearing tread segments are connected to a mechanical dampener which in turn is attached to the rim structure. In this way, the power generation devices can be utilized both for vehicle wheels that use today's pneumatic tyres and vehicle wheels that may use loadbearing tread segments.

The rim structure may comprise an outer rim structure part and an inner rim structure part, wherein a portion of the inner rim structure part is arranged to fit inside the outer rim structure part and where the outer rim structure part and inner rim structure part are arranged to be fastened together. In this way, the rim can be opened to provide for an easy installation of the various parts of the vehicle wheel as well as provide a way to manufacture the rim structure cost effectively.

The outer annular tread may be mounted to an outer annular tread portion of the outer rim structure part, the central annular tread may be mounted to a central annular tread portion of the outer rim structure part and the inner annular tread may be mounted to an inner annular tread portion of the inner rim structure part. Alternatively, the inner annular tread may be mounted to an inner annular tread portion of the outer rim structure part. In this way, the installation may be flexible.

The annular loadbearing tread or treads may be arranged to carry most of a load of the vehicle on which they are attached. To provide the power generation devices with the ability to quickly move radially, the annular loadbearing tread or treads may be arranged to carry a majority of a load of the vehicle. Additionally, the vehicle wheel will have a smaller surface area in contact with the road which leads to an overall low amount of rolling friction.

The annular loadbearing tread segments may comprise a material with a lower coefficient of friction than the tread segments of the annular power generation tread. In this way, the outer and inner annular tread segments will generate a low amount of rolling friction while the central annular tread will provide a higher friction to ensure desired braking characteristics of the vehicle wheel. This will also lead to a reduction in wear of the outer and inner annular tread segments that will lead to a reduction of micro plastics that are shed from the vehicle wheel compared to a standard pneumatic tyre.

The loadbearing tread segments may be removably attached to the mechanical dampeners. In this way, worn or damaged tread segments can easily be removed when/if necessary. The removed tread segments can be recycled into new segments. Thus, in case of the loadbearing tread malfunctioning, the wheel will be able to continue to roll on the loadbearing tread and the power generation tread with its reciprocating element in its second state, albeit in a low velocity.

The vehicle wheel may be a vehicle wheel for a car, a truck, a motorcycle, a trailer or similar. The vehicle wheel is suitable for all vehicles that run on wheels and that can benefit from additional electric power.

The object is obtained in a second aspect by a method for generating a voltage from the rotation of a vehicle wheel according to the first aspect, wherein the method comprises:
- arranging one or more power generation devices in the rim structure, wherein each power generation device comprises at least one electrically conducting coil with at least one magnet arranged inside the coil or a piezoelectric element, and where one or more reciprocating elements each is connected to a respective power generation device,
- arranging the reciprocating elements such that in a first state the reciprocating elements extend beyond the annular loadbearing tread in a radial direction,
wherein during rotation of the vehicle wheel,
- moving the reciprocating elements radially inwards towards the rim structure when the reciprocating elements come in contact with the ground to a second state such that the reciprocating elements become at least flush with the annular loadbearing tread, and wherein during transition between the first state and the second state or between the second state and the first state,
- generating power from the one or more power generation devices by the movement of each reciprocating elements radially inwards towards the rim structure or outwards away from the rim structure thereto causing the at least one magnet or the at least one electrically conducting coil to move relative the other or to compress/decompress the piezoelectric element during the transition between the first state and the second state and/or between the second state and the first state, thereby generating a voltage in the at least one electrically conducting coil or in the piezoelectric element.

The method provides the same advantages as described above for the first aspect.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1 schematically shows a truck unit/tractor unit and a car, each equipped with a vehicle wheel according to the invention.
Figure 2 schematically shows a vehicle wheel according to a first example embodiment,
Figure 3 schematically shows a view of a rim structure of the vehicle wheel of the first example embodiment on which a loadbearing tread and a power generation device is mounted,
Figure 4 schematically shows a cross-sectional view of a vehicle wheel according to the first example embodiment,
Figure 5 schematically shows an exploded view of a vehicle wheel according to the first example embodiment,
Figures 6a and 6b schematically show a cross-sectional view of a loadbearing module and an exploded view showing the interior parts of the same,
Figure 7 schematically show an exploded view showing the outer parts of a power generation module according to the first example embodiment,
Figures 8a and 8b schematically show a cross-sectional view of a power generation module according to the first example embodiment and an exploded view showing the interior parts of the same,
Figures 9a and 9b schematically shows the power generation device according to the first example embodiment moving between the first and the second state,
Figure 10 schematically shows a vehicle wheel according to a second example embodiment,
Figure 11 schematically shows a view of a rim structure of the second example embodiment on which a loadbearing tread and a power generation device is mounted,
Figure 12 schematically shows a cross-sectional view of a vehicle wheel according to the second example embodiment,
Figure 13 schematically shows an exploded view of a vehicle wheel of the second example embodiment,
Figure 14 schematically shows a vehicle wheel according to a third example embodiment,
Figure 15a and 15b schematically show a cross-sectional view of the vehicle wheel according to the third example embodiment and a detailed view of the loadbearing modules and power generation module of the vehicle wheel according to the third example embodiment,
Figure 16 schematically shows a vehicle wheel according to a fourth example embodiment,
Figure 17a and 17 schematically show a cross-sectional view of the vehicle wheel according to the fourth example embodiment and a detailed view of the loadbearing module and power generation module of the vehicle wheel according to the fourth example embodiment,
Figure 18 schematically shows a vehicle wheel according to a fifth example embodiment,
Figure 19 schematically shows a vehicle wheel according to a sixth example embodiment,
Figures 20a to 20h schematically shows different example reciprocating elements,
Figures 21a to 21i schematically shows different example configurations of loadbearing modules and power generation modules,
Figures 22a to 22e schematically shows different example configurations of pneumatic tyres and power generation modules,
Figure 23 is a flowchart of a method for generating a voltage from the rotation of a vehicle wheel according to the invention.

### DETAILED DESCRIPTION

Aspects of the present disclosure will be described more fully hereinafter with reference to the accompanying drawings. The apparatus disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the disclosure. As used herein, the singular forms "a", "an" and "the" are intended to include the plural forms as well, unless the context clearly indicates otherwise.

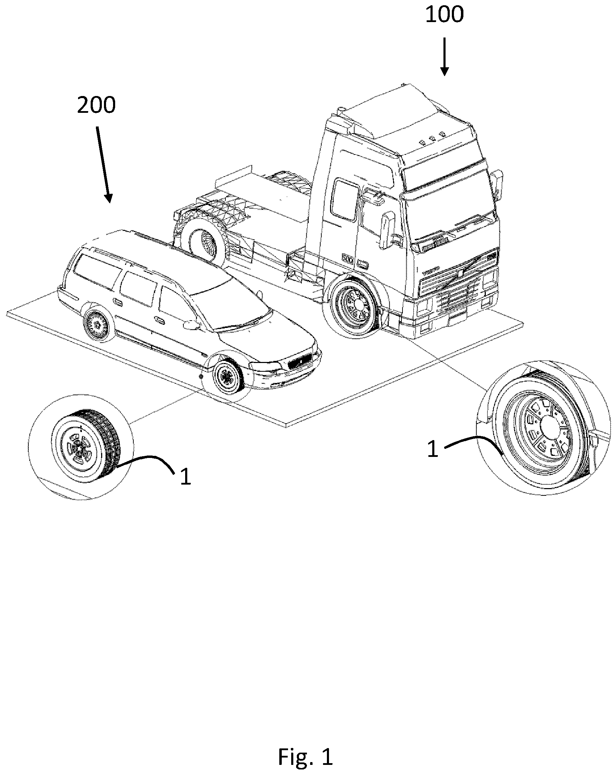

Figure 1 schematically shows a truck unit or tractor unit 100 and a car 200, each equipped with a vehicle wheel 1 according to the invention.

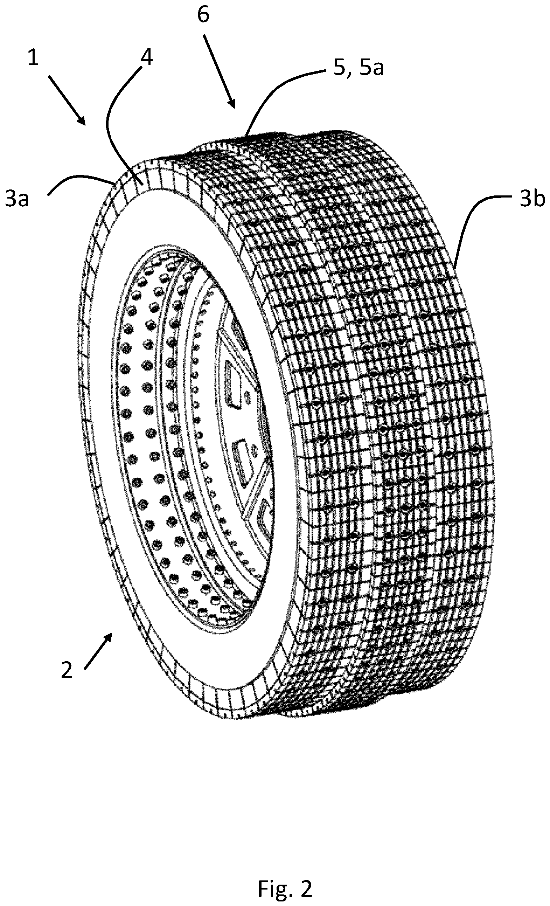

Figure 2 schematically shows a vehicle wheel 1 according to a first example embodiment.

The vehicle wheel 1 of figure 2 is intended for use with heavy vehicles such as box trucks, flatbed trucks, tractors, trailers and similar.

The vehicle wheel 1 comprises a rim structure 2 onto which rim structure 2 two annular loadbearing treads 3a, 3b are mounted. The loadbearing treads 3a, 3b is made up of a plurality of loadbearing modules 4. A plurality of power generation modules 5 each comprising a reciprocating element 5a and a power generation device (not shown) are mounted to the rim structure 2 with the power generation devices being mounted closer to the rim structure 2 than the radial extension of the annular loadbearing treads 3a, 3b in a radial direction. The rim structure 2 can be made of for example steel or aluminium.

In the example embodiment of figure 2, the power generation devices are arranged underneath reciprocating elements 5a with one reciprocating element 5a each being connected to a respective power generation device. Each power generation device comprises at least one electrically conducting coil with at least one magnet arranged inside the coil. The at least one magnet or the at least one electrically conducting coil are arranged to move relative the other inside the power generation device.

In the first example embodiment, each reciprocating element 5a is a power generation tread segment 5a. All power generation tread segments 5a make up one annular power generation tread 6. Each power generation tread segment 5a of the annular power generation tread 6 is arranged to be movable in a radial direction relative to the rim structure 2 onto which it is mounted. The power generation tread segments 5a are made of for instance rubber, like in a normal tyre, but any elastic material fulfilling the demands of the vehicle can be considered. The most common material is styrene-butadiene copolymer.

In the example of figure 2, the annular power generation tread 6 is arranged between two annular loadbearing treads 3a, 3b in an axial direction of the vehicle wheel 1. It is also possible to have one annular loadbearing tread arranged beside an annular power generation tread 6 in the axial direction.

The invention also provides for only having one or more annular loadbearing treads where reciprocating elements 5a connected to power generation devices are arranged to run through openings in the loadbearing tread. The loadbearing treads are also made of rubber, but with a higher shore hardness according to ISO 48-4 or ASTM D2240 than the power generation tread 6.

The power generation tread segments 5a of the annular power generation tread 6 connected to their respective electrical power generation devices arranged in the rim structure 2, in a first state extend beyond the annular loadbearing treads 3a, 3b in a radial direction as can be seen from figure 2.

Alternatively, as mentioned above, the power generation devices can be arranged underneath one or more the annular loadbearing treads with the reciprocating elements 5a being arranged to extend out from openings in the loadbearing tread segments 4a.

In figure 2, the reciprocating elements 5a are in the first state, where the reciprocating elements 5a extend beyond the annular loadbearing treads 3a, 3b in a radial direction. When a vehicle to which the vehicle wheel 1 is attached moves forward or backward, the vehicle wheel 1 rolls along a surface (not shown) and the reciprocating elements 5a come into contact with the surface it is travelling on, such as a road. When the reciprocating elements 5a come into contact with the surface, the reciprocating elements 5a are arranged to move radially inwards towards the rim structure 2 to a second state.

In the second state, the reciprocating elements 5a become at least flush with the annular loadbearing treads 3a, 3b. Should any reciprocating element 5a encounter an obstacle, such as a curb, a rock or any other unevenness in the surface, the reciprocating element 5a can move further towards the rim structure 2 in order for the reciprocating elements 5a to reduce the risk of damage to themselves and to the power generation devices to which they are connected.

During transition between the first state and the second state and during transition between the second state and the first state respectively, each reciprocating element 5a thus moves radially inwards towards the rim structure 2 and moves radially outwards away from the rim structure 2, respectively. The outward movement may be unassisted, i.e. the reciprocating elements 5a move outwards due to the centrifugal (pseudo-)force when observing the vehicle wheel 1 in its rotating reference frame. This happens repeatedly for each reciprocating element 5a as the vehicle wheel 1 rotates on the surface. During each movement radially inwards or outwards of the reciprocating elements 5a, each power generation device connected thereto generates an electromotive force from the radial movement of the reciprocating elements 5a connected thereto causing the at least one magnet or the at least one electrically conducting coil to move relative the other during the transition between the first state and the second state and/or between the second state and the first state. The electromotive force can be used to generate a voltage in the at least one electrically conducting coil that can be used to drive a current through a load in the vehicle wheel 1 or in the vehicle to which the vehicle wheel 1 is connected. The outward movement can also be assisted by that the power generation tread 6 is attached to the rim structure 2 by means of return springs (not shown).

In all example embodiments where present, the annular loadbearing treads of the vehicle wheel 1 are arranged to carry the majority of a load of the vehicle on which they are attached. The power generation tread segments 5a that are in contact with the road are intended to increase the braking power of the vehicle wheel 1 in order for the vehicle wheel 1 to fulfil road safety standards.

As an example, the annular loadbearing treads are arranged to carry more than 90 % of the vehicle's weight, specifically more than 95 % of the vehicle's weight, more specifically more than 99 % of the vehicle's weight. The relationship between the width of the loadbearing tread and the power generation tread, the force of the return spring and the compression of the loadbearing tread in connection to the vehicle's weight determines how much of the vehicle's weight that the loadbearing tread carries.

The dimensions of the annular loadbearing tread segments are among other things determined by the spring constant of the return spring (or equivalent measures for the alternatives to the return spring), the number of springs (or equivalent), Shore factor and width relative total area of compression.

The power generation tread segments act with a lower force on the road surface but may be made of a material with a larger coefficient of friction and can therefore create the same or improved brake characteristics than a known all-pneumatic tyre.

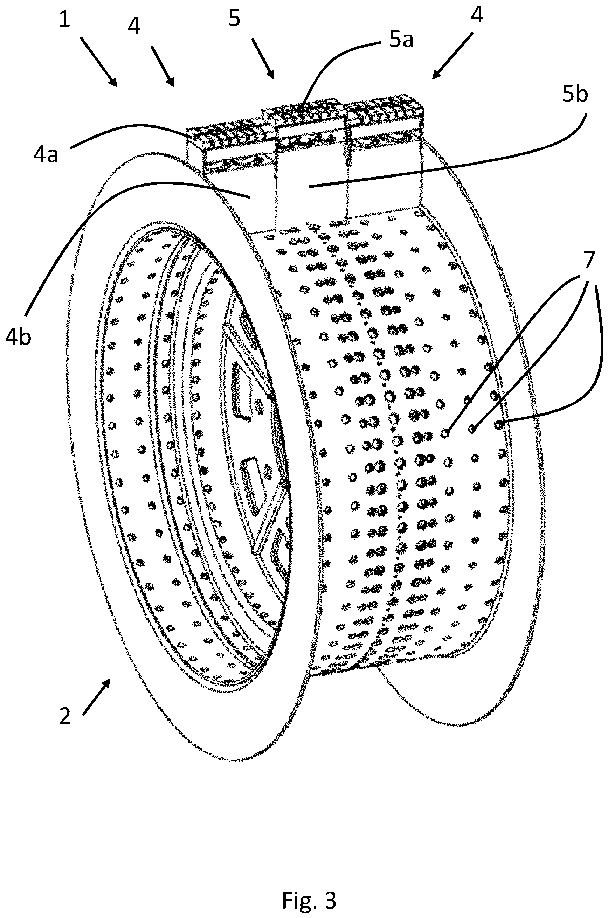

Figure 3 schematically shows a view of a rim structure 2 of the vehicle wheel 1 of the first example embodiment onto which a pair of loadbearing modules 4, i.e. a loadbearing tread segments 4a connected to mechanical dampeners 4b and a power generation module 5, i.e. a reciprocating element 5a connected to a power generation device 5b are mounted. In this example embodiment, the reciprocating element 5a is a power generation tread segment 5a. The rim structure 2 comprises a plurality of mounting holes 7 into which the loadbearing modules 4 and the power generation module 5 can be mounted.

In the first example embodiment shown in figure 3, the loadbearing tread segments 4a is connected to a mechanical dampener 4b comprising a plurality of springs (not shown). Alternatively, the mechanical dampener 4b can be a hydraulic dampener.

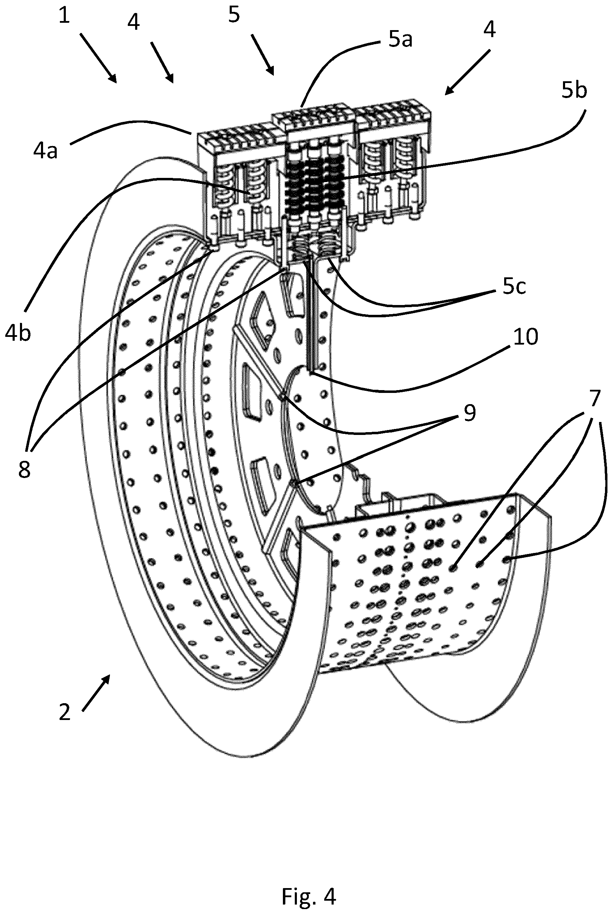

Figure 4 schematically shows a cross-sectional view of a vehicle wheel 1 according to the first example embodiment. In figure 4, the inner parts of the mechanical dampener 4b to which the loadbearing tread segments 4a is connected and the inner parts of the power generation device 5b to which the reciprocating elements 5a are connected can be seen. It is also shown how the respective loadbearing modules 4 and the power generation module 5 is connected to the rim structure 2.

In the first example embodiment, mounting fastening means 8 such as mounting screws connect the loadbearing module 4 and the power generation module 5 to the rim structure 2 through a set of mounting holes 7 arranged for each row of loadbearing modules 4 and the power generation module 5 from the inside of the rim structure 2.

The power generation module 5 is connected to the rim structure 2 by means of return springs 5c that are arranged to assist in returning the reciprocating element 5a, and everything to which it is attached, to the first state when losing contact with the road after it has been depressed to the second state. Additionally, the return springs 5c ensure that the power generation tread segment 5a has good contact with the road surface.

Additionally, several cable channels 9 can be seen in which cables 10 running from coils 5d in several power generation devices 5b are assembled in. The cables 10 in the cable channels 9 are used as part of a circuit that utilizes the voltage generated. The power generation devices can be connected in series and/or in parallel depending on desired characteristics of the circuits that they make up. Signal cables from any sensors arranged in the wheel, can also be run in the cable channels 9.

The power generation devices 5b may as an alternative to cables, with or without connectors, running from the coils 5d comprise an integrated male or female connector arranged at the bottom of the power generation device 5b that connects to a corresponding female or male connector in the rim structure 2.

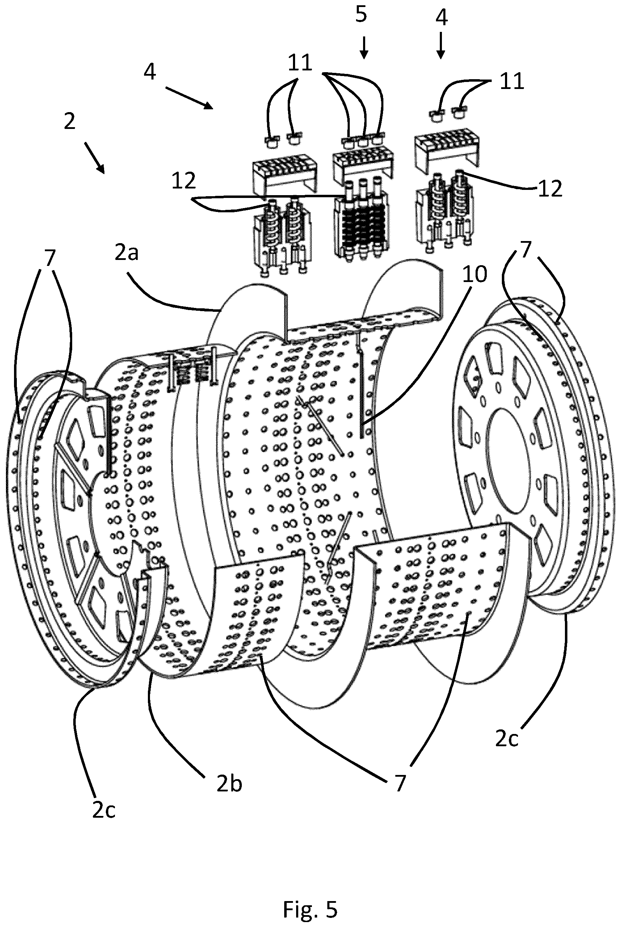

Figure 5 schematically shows an exploded view of a vehicle wheel 1 according to the first example embodiment. In figure 5, the various parts of the rim structure 2 can be seen.

The rim structure 2 comprises an outer rim structure part 2a and an inner rim structure part 2b as seen in the radial direction. Generally, at least a portion of the inner rim structure part 2b is arranged to fit inside the outer rim structure part 2a. In this example, the entire inner rim structure part 2b fits inside the outer rim structure part 2a. The outer rim structure part 2a and inner rim structure part 2b are arranged to be fastened together. Fastening can be made by screws, rivets, glue, spot welding or full welding. The rim structure 2 can alternatively be cast or forged. Two axial rim structure parts 2c arranged on either side of the fastened inner rim structure part 2b and outer rim structure part 2a, seen in an axial direction, complete the rim structure 2.

In figure 5, the mounting holes 7 for fastening the mechanical dampener 4b and the power generation device 5b can be seen on all rim structure parts 2a, 2b, 2c. The mounting holes 7 on the inner rim structure part 2b and outer rim structure part 2a align when fitting the inner rim structure part 2b and outer rim structure part 2a together. It is however possible to have the mounting holes 7 for fastening the mechanical dampener 4b and the power generation device 5b only on the inner rim structure part 2b and outer rim structure part 2a.

In figure 5, removable friction studs 11 can be seen placed above the mechanical dampener 4b and the power generation device 5b. These friction studs 11 can be mounted onto the loadbearing tread segments 4a and the power generation tread segments 5a during icy conditions by removing a number of loadbearing tread segments 4a and power generation tread segments 5a and attaching the friction studs 11 and reattaching the loadbearing tread segments 4a and power generation tread segments 5a. Assembly screws 12 that run through the loadbearing tread segments 4a and power generation tread segments 5a attach the loadbearing tread segments 4a and power generation tread segments 5a to the mechanical dampeners 4b and power generation devices 5b respectively.

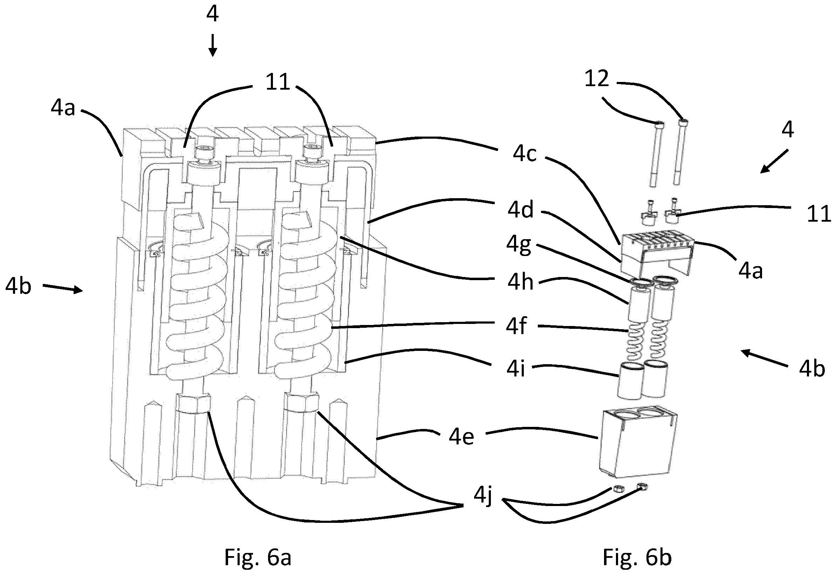

Figures 6a and 6b schematically show a loadbearing module 4 and an exploded view of the same.

The loadbearing tread segments 4a of the loadbearing module 4 comprises a rubber surface 4c with a protective barrier 4d arranged inside the rubber surface 4c to prevent the intrusion of water and particles into the mechanical dampener 4b. The protective barrier 4d is for instance a metal or plastic sheet vulcanized into the loadbearing tread segments 4a and extend throughout the width of the loadbearing tread segment 4a as well as forward (in a circumferential direction) and downward (radially) to the sides of the loadbearing tread segment 4a. The protective cover can extend outside of the loadbearing tread segment in both a forward and downward direction to cover any gap between modules and to prevent intrusion from the sides. The mechanical dampener 4b further comprises a spring housing 4e wherein two dampening springs 4f can be arranged.

A spring seal 4g is installed on top of the spring housing 4e to reduce the risk of intrusion of unwanted fluids or particles. The dampening springs 4f are arranged in respective inner gliding casings 4h that each are enclosed by an outer wear casing 4i. A fastening nut 4j is arranged at the bottom of the spring housing 4e. Several assembly screws 12, in this example two, are arranged to run through the loadbearing tread segments 4a and run inside the dampening springs 4f in the inner gliding casings 4h. Each assembly screw 12 is there after fastened with a respective fastening nut 4j. This completes the loadbearing module 4 that is now ready for fastening onto the rim structure 2 by means of mounting screws 8 that run through the rim structure 2 into mounting threads 4k in the spring housing 4e.

To assemble a loadbearing module 4 according to figures 6a and 6b, the spring seal 4g is attached to each respective outer wear casing 4i. A dampening spring 4f is placed inside each respective inner gliding casing 4h. At the bottom of a spring housing 4e, a fastening nut 4j for each assembly screw 12 is placed. Each inner gliding casing 4h with dampening spring 4f is arranged inside a respective outer wear casing 4i. Each outer wear casing 4i is thereafter inserted into the spring housing 4e. The loadbearing tread segments 4a is thereafter attached on top of the spring housing 4e with the vertical sides of the protective barrier4d being arranged to fit inside corresponding slits in the spring housing 4e. The loadbearing module 4 is completed by inserting the assembly screws 12 into openings in the loadbearing tread segments 4a, through the spring seal 4g, the outer wear casing 4i, the inner gliding casing 4h and the dampening springs 4f and attaching each assembly screw 12 to a respective fastening nut 4j.

As an add-on, friction studs 11 can be attached to the loadbearing tread segments 4a by inserting them into the assembly screw openings of the loadbearing tread segments 4a and thereafter fastening the assembly screws 12 with the fastening nuts 4j.

The spring housing 4e can be made in one piece or in several pieces and be made of metal or plastic.

The loadbearing tread segments 4a are removably attached to the mechanical dampener 4b. In this way, it is easy to for instance replace the mechanical dampener 4b with a new one if needed.

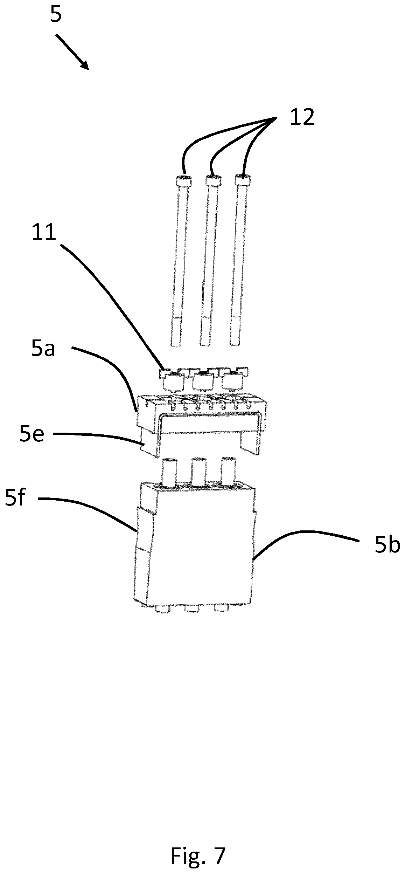

Figure 7 schematically shows a power generation module 5. The first example power generation module 5 comprises three assembly screws 12 that attaches the reciprocating element 5a to the power generation device 5b.

The reciprocating element 5a in this example is, as described above, a power generation tread segment 5a that is made of rubber or a similar material that allows the vehicle wheel 1 to obtain the desired braking characteristics when the power generation tread segment 5a is in contact with the road. Also, in figure 7, the optional friction studs 11 as described above can be seen. The assembly screws 12 run through the friction studs 11 such that the friction studs 11, when needed, are safely fastened to the power generation tread segment 5a when the power generation module 5 is attached to the rim structure 2. In one example embodiment, one or more temperature sensors can be connected to the friction studs 11 or to the assembly screws 12 of the power generation tread segments 5a or the loadbearing tread segments 4a to continuously measure the temperature of the road surface.

Embedded in the power generation tread segment 5a is a protective barrier 5e arranged to prevent the intrusion of water and particles into the power generation device 5b. The protective barrier 5e is for instance a metal or plastic sheet vulcanized into the power generation tread segment 5a and extend forward and downward to the sides of the power generation tread segment 5a as described above for the loadbearing tread segment 4a.

Interior parts of the power generation device 5b are arranged in a protective cover 5f that encloses the interior parts of the power generation device 5b. The protective cover 5f can be made in one piece embedding the interior parts of the power generation device 5b in the protective cover 5f or the protective cover 5f can be made into two or more pieces that fit together to form an openable enclosure in order to reach and possibly replace the interior parts of the power generation device 5b. The assembly screws 12 run through the protective cover 5f and are used to fasten the power generation device 5b to the power generation tread segment 5a, with or without friction studs 11, to one complete module that can be mounted to the rim structure 2.

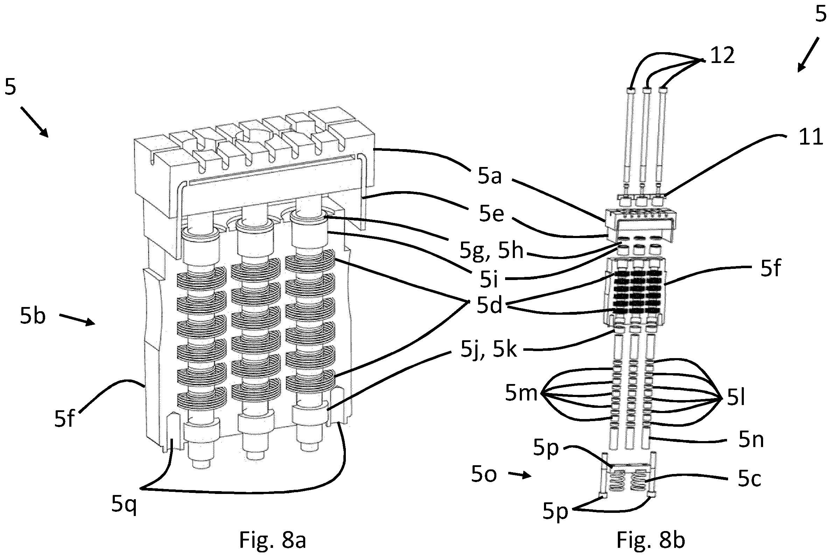

Figures 8a and 8b schematically show a cross-sectional view of a power generation module 5 and an exploded view showing the interior parts of a first example power generation module 5. Aside from the parts described in figure 7, the power generation device 5b comprises an upper bushing 5g and upper power generation device seal 5h together with an upper distance 5i. Inside the protective cover 5f, a number of coils 5d are arranged, through which the assembly screws 12 can run. A lower bushing 5j and lower power generation device seal 5k are arranged at the bottom of the power generation device 5b. A number of hollow magnets 5l and distance rings 5m are arranged to run inside the coils 5d. The assembly screws 12 will run through each of the magnets 5l, upper distance 5i and distance rings 5m and the assembly screws 12 with the magnets 5l and distance rings 5m in place will in turn run through the coils 5d. In this way, when the reciprocating elements 5a move from the first state to the second state, the magnets 5l will move relative to the coils 5d, generating a voltage in each coil 5d through electromotive force. One magnet 5l and one coil 5d make up one magnet-coil pair. The voltage can be utilized in for instance the vehicle electric motor or battery by connecting the power generation device 5b to a circuit connected to the vehicle's electrical system. The vehicle wheel 1 may comprise a slip ring arrangement (not shown) or any other connections that allows for releasable electrical and signal connections between the vehicle wheel 1 and the vehicle. The invention may also be included in system comprising a vehicle wheel according to any described embodiment together with a releasable electrical and signal connection with a vehicle.

During movement of the reciprocating elements 5a from the first state to the second state, the reciprocating element 5a will push on each magnet 5l (or coil 5d) such that the magnet 5l will move relative the coil 5d thereby generating an electromotive force by each magnet-coil pair. The distance that the reciprocating element 5a moves is approximately the size of the height of a coil 5d such that when the reciprocating element 5a is in the second state, each magnet 5l is no longer magnetically connected to the respective coil 5d. This is an example, and the magnets 5l or coils 5d can be made to move a shorter or longer distance depending on application.

Each power generation device 5b comprises an electric cable (not shown) that runs from the power generation device 5b to a distribution point in the rim structure 2 through cable channels 9 in the rim structure 2. In this way, the power generated from each power generation device 5b may be collected and used in an electrical component in the vehicle wheel 1 or in the vehicle.

The power generation tread segments 5a are removably attached to the power generation device 5b leading to that it is easy to replace an older or malfunctioning power generation device 5b with a new.

It is to be understood that the number of coils 5d and magnets 5l, as well as the material of the wire of the coils 5d and the types of magnets 5l can be varied in order to obtain the desired electromotive force achieved by each transition between the first and second states.

To assemble a power generation module 5 according to figures 8a and 8b, the upper power generation device seal 5h is mounted onto the upper bushing 5g. The upper distance 5i and all distance rings 5m and magnets 5l are alternatingly stacked. All coils 5d are thereafter mounted on the distance and magnet stacks and a lower distance 5n is mounted to complete the stacks. The stacks are inserted into the protective cover 5f and all cables from the respective coils 5d are run to their respective cable channels 9. The protective cover 5f is closed and screwed, welded, or glued together. The assembly screws 12 are inserted through the power generation tread segment 5a and through the stacks inside the protective cover 5f. The assembly screws 12 are attached to threads in the lower distance 5n. The assembly screws 12 and thereby the power generation tread segment 5a can now move when pressure is applied to the power generation tread segment 5a. This completes the power generation module 5 that can now be attached to the rim structure 2.

As mentioned above, the protective cover 5f can be made in one piece or at least two pieces forming the protective cover 5f.

For a protective cover made of one part, the bushings and coils are cast in the protective cover with through holes in which the magnets and assembly screws can run. For a protective cover 5f made of two or more parts, bushings and coils are mounted in the protective cover 5f and the protective cover 5f is thereafter assembled by for instance screwing, welding, or gluing.

Common for both alternatives is that the coils may be loosely wound in an essentially circular shape, or the coil may be cast in a coil casing of for instance plastic with a central hole for the magnets to run through. The diameter of the central hole has a narrow tolerance relative to the diameter of the magnet.

At the bottom, a return spring package 5o is seen comprising a pair of return springs 5c that allow the reciprocating element 5a to return to the first state. The return springs 5c are attached to a pressure mount 5p that is attached to the inside of the rim structure 2, directly beneath the power generation device 5b. The pressure mount 5p transfers the movement of the reciprocating element 5a through the power generation device 5b to the return springs 5c. Once the return spring package 5o is mounted, the power generation device 5b is placed on the corresponding position on the outside of the rim structure 2 and fastened to the rim structure 2 by mounting screws 8. The mounting screws 8 are arranged to be fastened into corresponding threaded mounting sockets 5q arranged in the protective cover 5f of the power generation device 5b.

As an example, it has been shown that a vehicle wheel 1 according to figures 1-8, when travelling at 90 km/h can produce theoretically 17,2 kW. This is achieved by having an outside diameter of the vehicle wheel 1 of 1080 mm, a maximal power generation of each magnet-coil pair of 1 W, 65 power generation devices 5b each comprising 18 magnet-coil pairs. At 90 km/h, the vehicle wheel 1 rotates with approximately 7,37 revolutions per second. It is calculated that the time needed for the transition between the first and second state, i.e. for half the reciprocating movement, for each reciprocating element 5a is approximately 2 milliseconds. As each magnet-coil pair can generate 1 W with each transition between the first and second state, this means that 2 W can be generated per revolution of the wheel 1. The reciprocating elements 5a will move radially inwards and outwards between the first and second states in sequence one after the other as the wheel 1 rotates.

This results in that the maximum power that can be generated from the vehicle wheel 1 is 2 W per revolution (1 W from the transition from the first state to the second state and 1 W from the transition from the second state to the first state) and magnet-coil pair * 18 magnet-coil pairs per power generation device 5b * 65 power generation devices 5b * 7,37 revolutions per second equalling 17 242 W.

Some minor losses are expected that will reduce the actual power generated, but the force required to press the magnet through the coil is small compared to the force of the vehicle's weight. However, this example demonstrates that a vehicle wheel 1 according to the invention is capable of providing electrical power through the power generation device 5b. This power can be supplied to various components in the vehicle wheel 1 or in the vehicle that it is attached to and the power can be used to extend the range of the vehicle by being input to an electric motor or to the battery or to drive specific components such that the load on the battery is reduced. Having several vehicle wheels 1 will multiply the power generated. Not all vehicle wheels 1 need to have the same configuration of number of power generation devices 5b. Power generation will decrease with decreased velocity of the vehicle.

The loadbearing modules 4 and the power generation modules 5 are all wider in the circumferential direction at the outer (or upper) portion of each module than at the inner (or lower) portion of the module. This is to ensure that all modules, when mounted, fit securely to the rim structure 2 and to each other to ensure that the segments form a mechanically strong structure such that the wheel performs during acceleration and braking as required. This also creates a self-locking arrangement between the modules and maximises the number of power generation modules 5 for each vehicle wheel size and ensures maximum durability.

To mount the loadbearing modules 4 and the power generation modules 5 with their respective power generation devices 5b onto the rim structure 2, the two axial rim structure parts 2c are arranged to abut each other. All return spring packages 5o are mounted in a circle in the mounting holes 7 placed around the two axial rim structure parts 2c. The inner rim structure part 2b is placed on top of all return springs 5c to keep them in place for further assembly of the vehicle wheel 1. The inner rim structure part 2b and the two axial rim structure parts 2c combined is now inserted into the outer rim structure part 2a and centred such that the mounting holes 7 of the outer rim structure part 2a align with the mounting holes 7 of the inner rim structure part 2b and the axial rim structure parts 2c (if present). The outer rim structure part 2a is attached to the previously assembled rim structure parts 2b, 2c. All loadbearing modules 4 are attached to the rim structure 2 via mounting screws 8 to form an annular load bearing tread 3. All power generation modules 5 are attached to the rim structure 2 via mounting screws 8 to form an annular power generation tread 6. All cables 10 from the power generation devices 5b are inserted into the cable channels 9 of the axial rim structure parts 2c.

In case the rim structure 2 is designed differently, the mounting procedure is adapted accordingly.

As an alternative to the coils 5d and magnets described above, piezoelectric elements can be arranged in the power generation devices 5b and compress and decompress during transition between the first and second states. This also generates a voltage in the power generation devices 5b that can drive a current as described above.

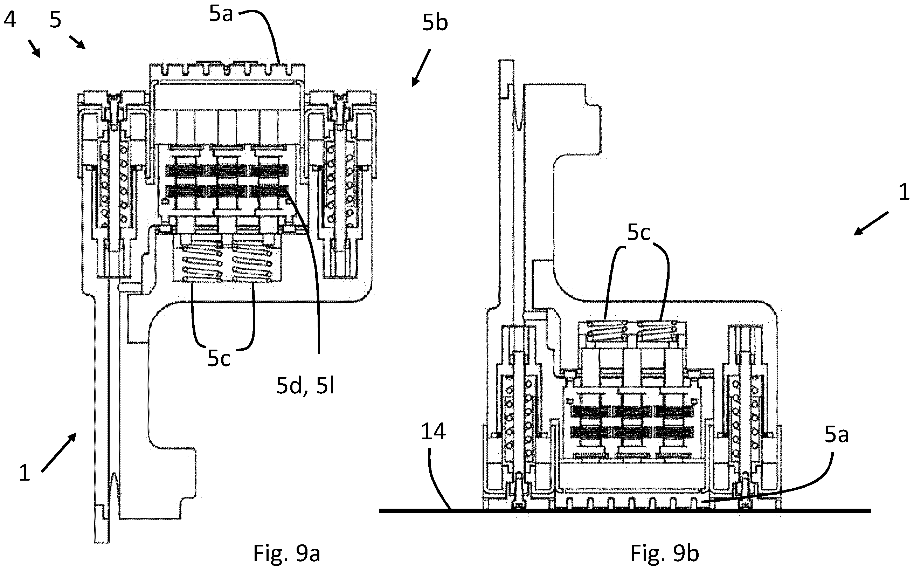

Figures 9a and 9b schematically show a cross section of loadbearing modules 4 and power generation module 5. The power generation device 5b of the power generation module 5 is according to a further example embodiment with fewer coils 5d and magnets 5l than in the preceding example. The reciprocating elements 5a moving between the first state and the second state. In the figures, the loadbearing modules 4 and the power generation modules 5 are seen attached to the rim structure 2. In figure 9a, the reciprocating element 5a, i.e. the power generation tread segment 5a extends beyond the annular loadbearing tread segments 4a in a radial direction. The return springs 5c are in a relaxed state.

In figure 9b, the vehicle wheel 1 is in contact with the ground and the power generation tread segment 5a is pressed radially inwards from the contact and has become flush with the loadbearing tread segments 4a, i.e. is in the second state. Due to this movement, the magnets 5l of the power generation device 5b have moved relative the coils 5d and a voltage is produced. Once the contact with the ground is over, the return springs 5c assist in returning the reciprocating element 5a to the first state. During the movement from the second state to the first state, the magnets 5l move once again relative the coils 5d and a voltage is produced. Voltage is thus generated two times during the movement of the reciprocating element 5a per revolution of the vehicle wheel 1.

Should the vehicle wheel 1 encounter a small unevenness, it is possible for the loadbearing tread segment and the power generation tread segment to deform slightly to absorb the impact. Also, the vehicle's suspension will absorb any bumps in the road.

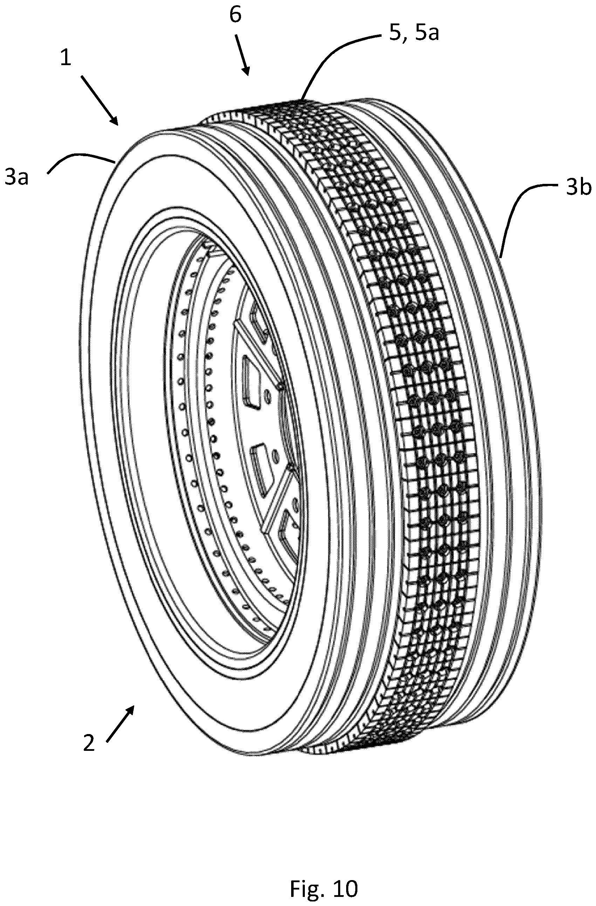

Figure 10 schematically shows a vehicle wheel 1 according to a second example embodiment. In figure 10, the loadbearing tread 3 is made up of two annular pneumatic tyres 3a, 3b mounted to the rim structure 2 instead of several loadbearing modules 4. In the example of figure 10, one annular pneumatic tyre 3a, 3b is mounted on either side of the reciprocating elements 5a of the power generation modules 5 in an axial direction. It is possible to have only one annular pneumatic tyre arranged besides the power generation modules 5.

It is also possible for a wheel to have a combination of one annular pneumatic tyre with one annular loadbearing tread according to figures 2-9.

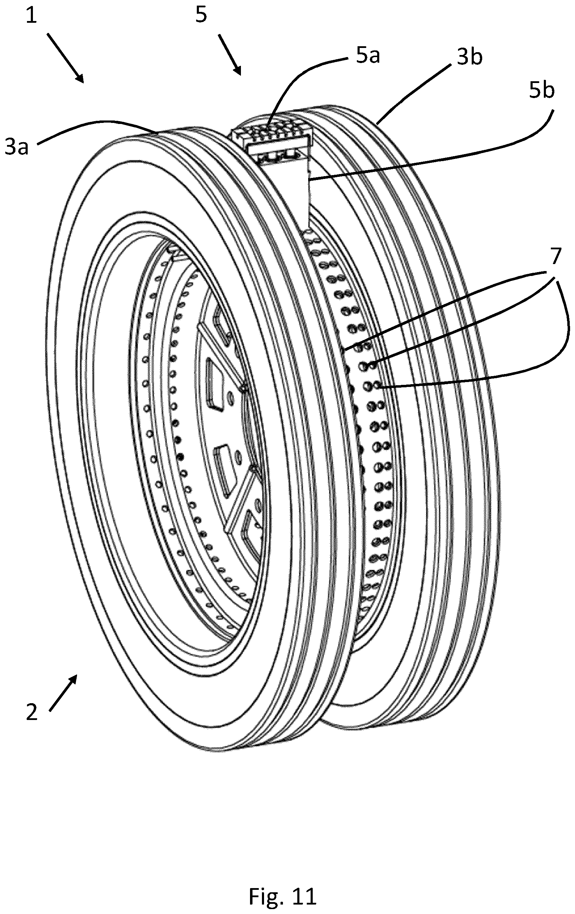

Figure 11 schematically shows a view of a rim structure 2 of the second example embodiment on which loadbearing treads 3a, 3b in the form of annular pneumatic tyres and a power generation module 5 is mounted. This is a similar figure to figure 3 and aims to illustrate how the power generation modules 5 are arranged in relation to the annular pneumatic tyres 3a, 3b and the mounting holes 7 arranged in the rim structure 2 to which the power generation modules 5 are attached.

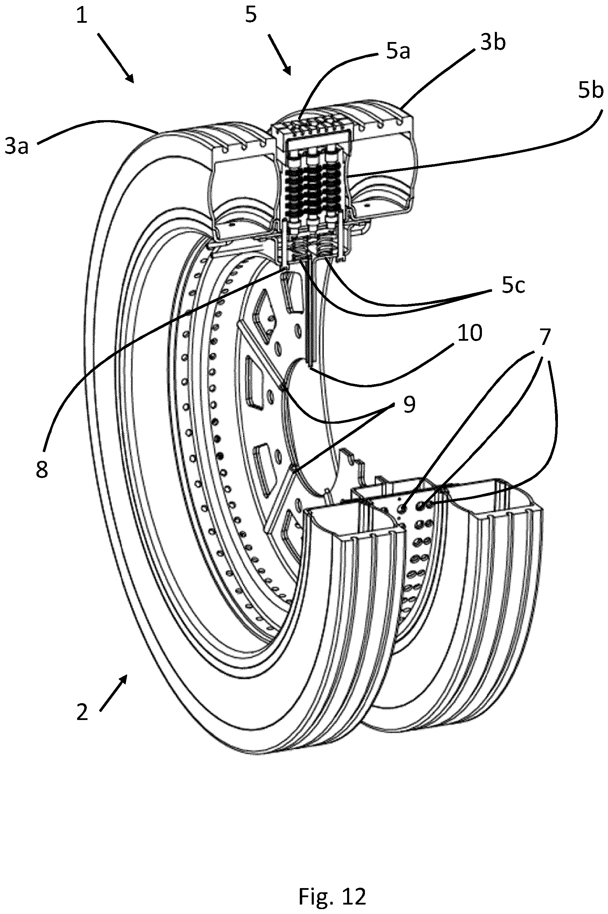

Figure 12 schematically shows a cross-sectional view of a vehicle wheel 1 according to the second example embodiment. Like figure 4, the various parts of the vehicle wheel 1 and the power generation modules 5 can be seen. The annular pneumatic tyres 3a, 3b are arranged to be pressurised in the same way as a normal pneumatic tyre, with the difference that each pneumatic tyre 3a, 3b can be pressurised independently or jointly, depending on design. One or more nozzles for supplying air to the pneumatic tyres are arranged on the rim structure 2 in a known way.

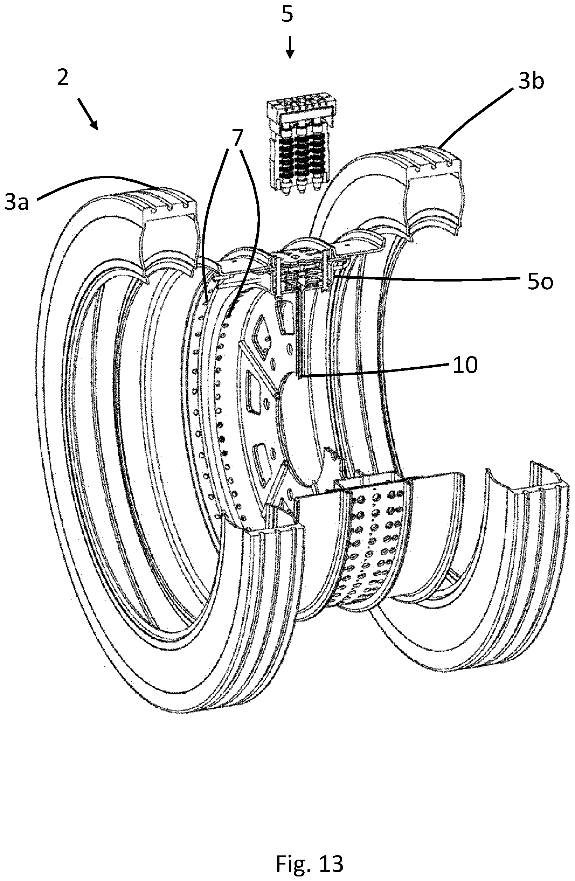

Figure 13 schematically shows an exploded view of a vehicle wheel 1 of the second example embodiment. In figure 13, the return spring package 5o and the mounting holes 7 for the power generation devices 5b can be seen.

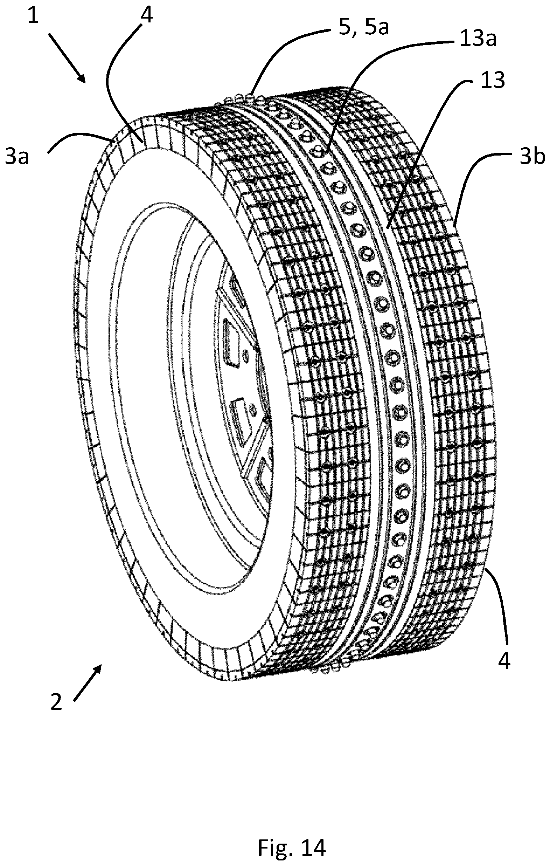

Figure 14 schematically shows a vehicle wheel 1 according to a third example embodiment. The third example embodiment is similar to the first example embodiment with the difference that the vehicle wheel 1 comprises an annular sealing surface 13 arranged to cover the power generation devices 5b instead of power generation tread segments. The annular sealing surface 13 is thus placed outside or on top of the power generation device 5b as seen in a radial direction. In the annular sealing surface 13, a plurality of through holes 13a are made that match the position of the reciprocating element 5a connected to the power generation device 5b. In the example of figure 14, the reciprocating element 5a is a rod extending through the annular sealing surface 13. The through holes 13a may be sealed due to them being machined to a tolerance relative the reciprocating element 5a that enables sealing or via an integrated sealing ring for each reciprocating element 5a.

The annular sealing surface 13 is made of rubber in order to provide sufficient braking power to the vehicle wheel 1.

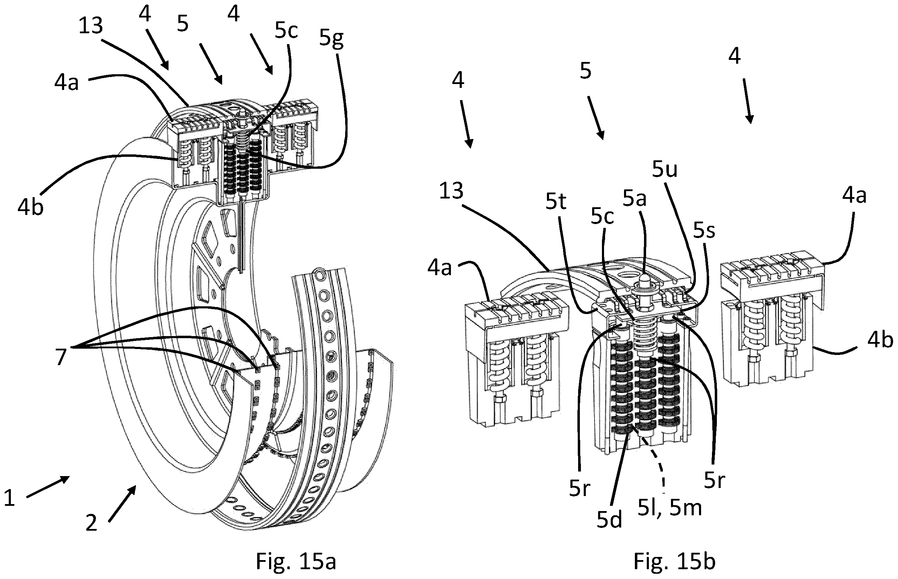

Figures 15a and 15b schematically shows a detailed view of the rim structure 2, loadbearing modules 4 and power generation module 5 of the vehicle wheel 1 according to the third example embodiment. As can be seen from the figures, the power generation device 5b is not connected to a return spring package fastened to the inside of the rim structure 2. Instead, one return spring 5c is arranged on one of the assembly screws 12 and placed between the reciprocating element 5a and the upper bushing 5g.

In this example embodiment, the assembly screws 12 that connect the reciprocating element 5a to the power generation device 5b are replaced with rods 5r on which the magnets 5l and distance rings 5m are arranged. Further, the reciprocating element 5a is connected to a pressure plate 5s that in turn is arranged to transfer the radial movement of the reciprocating element 5a to the magnets 5l (or coils 5d) such that the magnets 5l move relative the coils 5d via the rods 5r. The pressure plate 5s is arranged inside a bracket 5t on which damping springs 5u are arranged. The damping springs 5u provide an outwardly directed force independent of the loadbearing tread's compression but that follows the hysteresis.

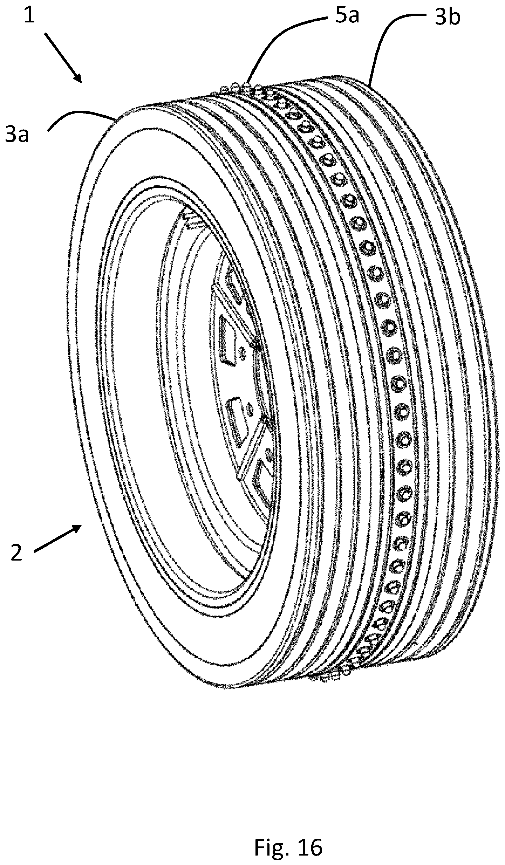

Figure 16 schematically shows a vehicle wheel 1 according to a fourth example embodiment. The fourth example embodiment is similar to the second example embodiment with the difference that the vehicle wheel 1 comprises an annular sealing surface 13 arranged to cover the power generation devices 5b. It is thus placed outside of or on top of the power generation device 5b in a radial direction similar to the example embodiments of figures 14 and 15a and 15b. In order to increase the sealing between the annular sealing surface 13 and the pneumatic tyres 3a, 3b, a sealant such as an adhesive can be administered between the annular sealing surface 13 and the pneumatic tyres 3a, 3b.

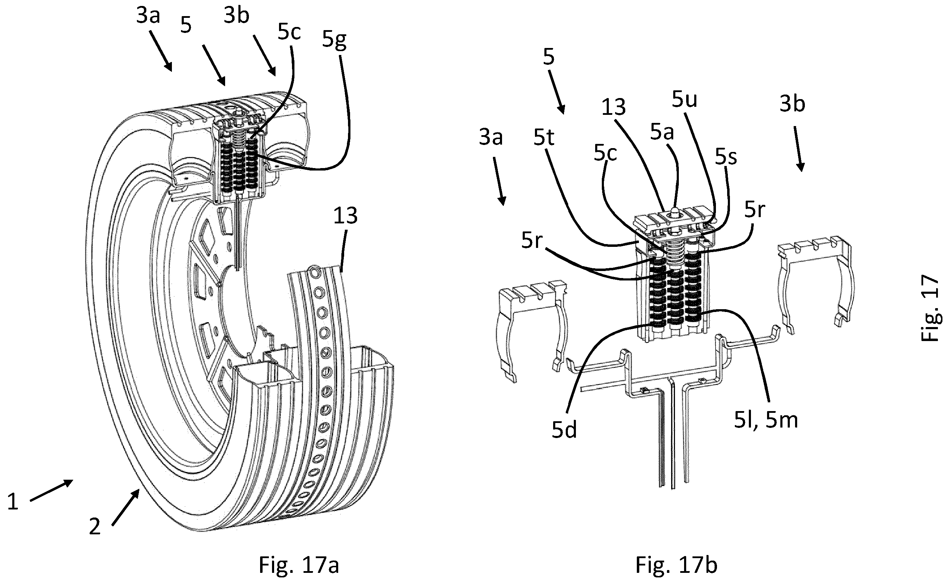

Figure 17 schematically shows a detailed view of the rim structure 2, loadbearing treads 3a, 3b and power generation device 5b of the vehicle wheel 1 according to the fourth example embodiment. The remaining parts are the same as in figures 14 and 15a and 15b.

Additionally, a small portion of the rim structure 2 is shown in figure 17b.

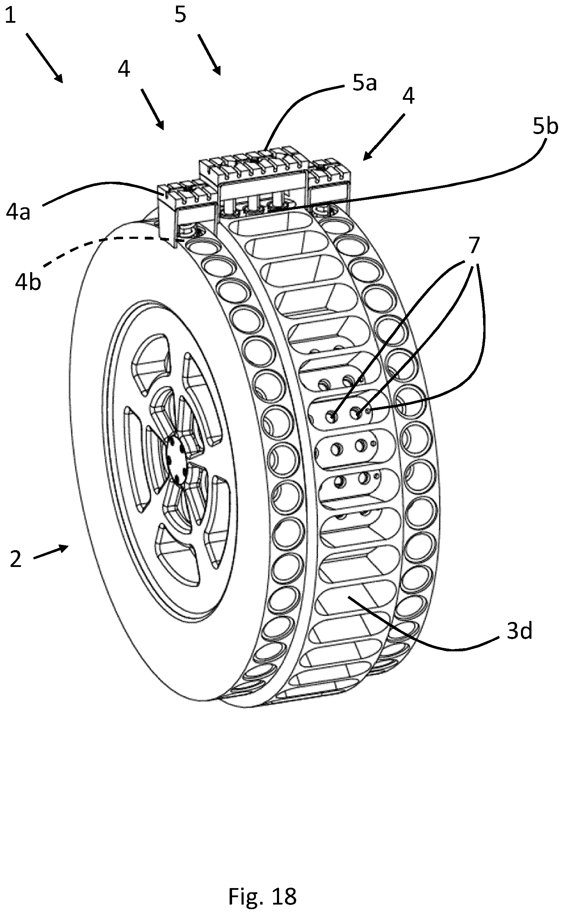

Figures 18 schematically shows a vehicle wheel 1 according to a fifth example embodiment. The vehicle wheel 1 according to the invention is also suitable for smaller vehicles such as cars as seen in figure 1.

Figure 18 show a vehicle wheel 1 for a car similar to the vehicle wheel 1 for a truck of figures 2-8. To make the vehicle wheel 1 conform to the sizes normally used by cars, the sizes, and/or the number of parts of the loadbearing modules 4 and the power generation module 5 have been reduced.

A further difference of the vehicle wheel 1 according to figure 18 relative the vehicle wheels 1 of figures 2-17 is that the rim structure 2 comprises assembly recesses 3d for each one of the loadbearing modules 4 and the power generation modules 5. At the bottom of each recess 3d are mounting holes 7 through which the mounting screws 8 can attach the loadbearing modules 4 and the power generation modules 5 to the rim structure 2. The loadbearing modules 4 and the power generation modules 5 are still fastened to the rim structure 2 according to the previous description, but this provides an alternative form of mounting the mechanical dampeners 4b and the power generation devices 5b to the rim structure 2.

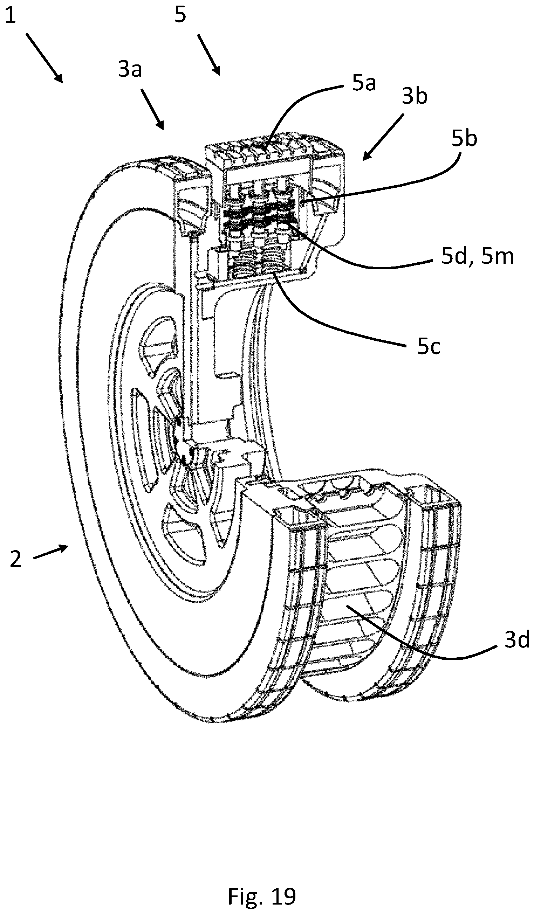

Figure 19 shows a vehicle wheel 1 according to a sixth example embodiment corresponding to the one described in conjunction with figures 6-13 but having a rim structure 2 comprising assembly recesses 3d similar to the one in figure 18.

Of course, the alternatives shown in figures 14-17 are also possible for car wheels.

As an example, it has been shown that a vehicle wheel 1 according to figures 18 and 19, when a vehicle is travelling at 110 km/h can produce theoretically 7,2 kW. This is achieved by having an outside diameter of the vehicle wheel 1 of 650 mm, a maximal power generation of each magnet-coil pair of 1 W, 40 power generation devices 5b each comprising 6 magnet-coil pairs. At 110 km/h, the vehicle wheel 1 rotates with approximately 14,96 revolutions per second. It is calculated that the time needed for the transition between the first and second state for each reciprocating element 5a is approximately 2 milliseconds. As each magnet-coil pair can generate 1 W with each transition between the first and second state, this means that 2 W can be generated per revolution.

This results in that the maximum power that can be generated from the vehicle wheel 1 is 2 W per revolution and magnet-coil pair* 6 magnet-coil pairs per power generation device 5b * 40 power generation devices 5b * 14,96 revolutions equalling 7 181 W.

Some losses are expected that will reduce the actual power generated. However, this example demonstrates that a vehicle wheel 1 according to the invention is capable of providing electrical power through the power generation device 5b. This power can be supplied to various components in the vehicle wheel 1 or in the vehicle that it is attached to and the power can be used to extend the range of the vehicle by being input to an electric motor or to the battery or to drive specific components such that the load on the battery is reduced. Having several wheels 1 will multiply the power generated. Not all vehicle wheels 1 need to have the same configuration of number of power generation devices 5b. Power generation will decrease with decreased velocity of the vehicle.

It is to be understood that by scaling the various parts of the vehicle wheels 1, different wheel diameters can be achieved. It is possible to scale only the size of the rim structure 2 to be able to fit more power generation devices 5b with reciprocating elements 5a and loadbearing tread segments onto the vehicle wheel 1 or to scale both the rim structure 2 and the power generation devices 5b with reciprocating elements 5a and loadbearing tread segments to keep the number the same for all sizes of vehicle wheels 1. Of course, the scaling of the various parts does not need to be same but can be varied.

The number of loadbearing tread segments and power generation devices 5b may be same or different. It is possible to have more or fewer power generation devices 5b than loadbearing tread segments.

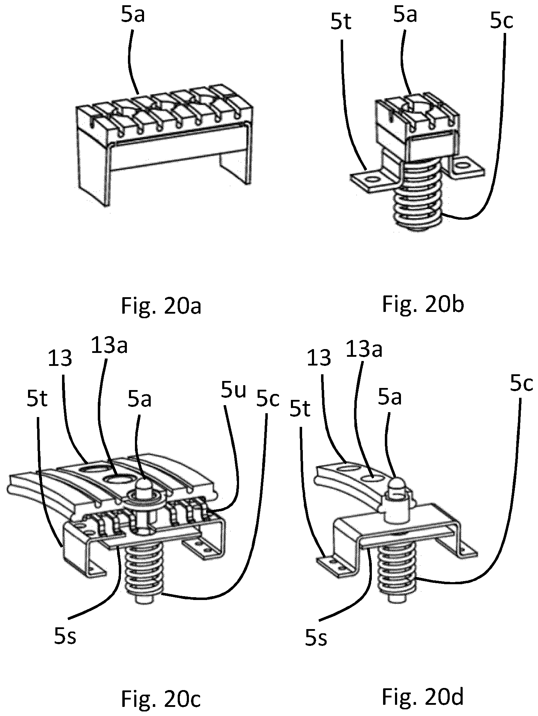

Figures 20a to 20h schematically shows different example of reciprocating elements 5a of the power generation module 5.

Figure 20a shows a reciprocating element 5a according to the first, second, fifth and sixth example embodiments of the application. The reciprocating element 5a is described above.

Figure 20b shows a narrower version of the reciprocating element 5a of figure 20a. In this example, the return spring 5c is arranged directly underneath the reciprocating element 5a and a bracket 5t transfers the motion of the reciprocating elements 5a to additional rods with magnets 5l as described above.

Figure 20c shows a reciprocating element 5a covered by an annular sealing surface 13 that is partly shown according to the third and fourth example embodiments of the application. The reciprocating element 5a is described above.

Figure 20d shows a reciprocating element 5a covered by a narrower annular sealing surface 13 than in figure 20c.

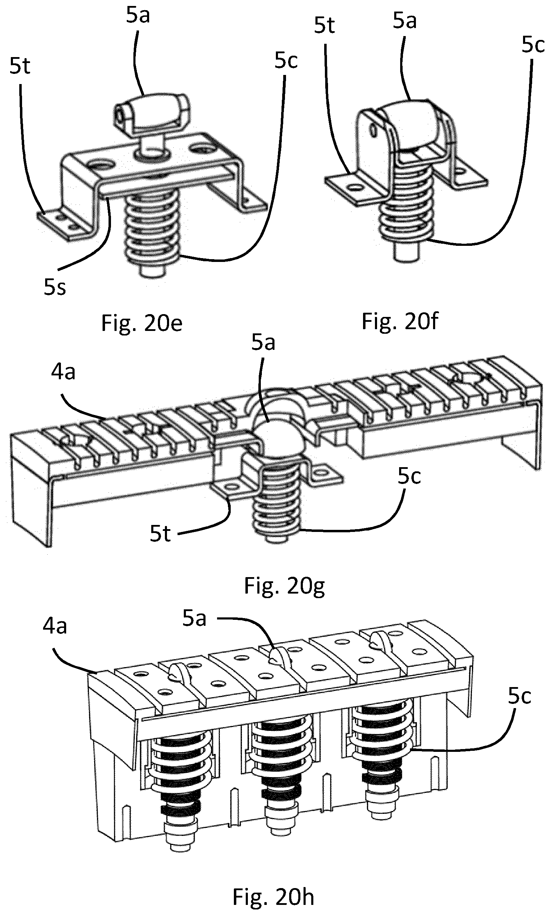

Figures 20e and 20f show further variations of a reciprocating element 5a where the reciprocating element 5a comprises a roller with various designs of brackets 5t and pressure plates 5s.

Figures 20g show an example of where the loadbearing tread 3 covers the entire width of the vehicle wheel 1. In figure 20g, the reciprocating element 5a is covered by a protrusion in the loadbearing tread 3 that allows the reciprocating element 5a to move when the protrusion in the loadbearing tread 3 encounters a surface while at the same time protecting the power generation module 5.

Figure 20h show several reciprocating elements 5a reciprocating out of the loadbearing tread segment 4a with each reciprocating element 5a being connected to a rod 5r in the power generation device 5b.

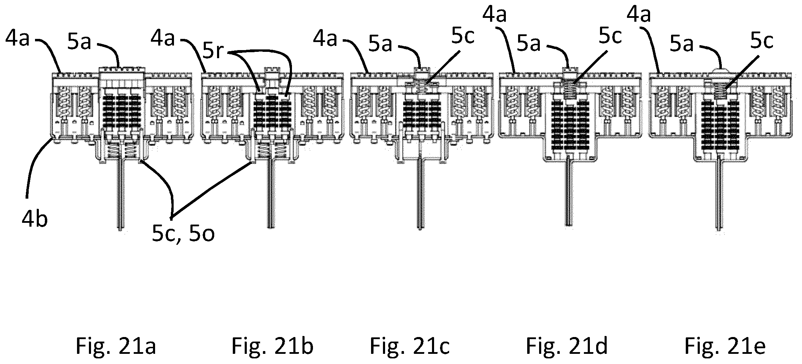

Figures 21a-21i show cross sections of different examples of arrangements of loadbearing modules 4 comprising mechanical dampeners 4b and power generation modules 5 for vehicle wheels 1 according to the invention.

Figure 21a shows loadbearing modules 4 and power generation modules 5 according to the first example embodiment described above.

Figure 21b shows loadbearing modules 4 and a narrower version of the power generation modules 5 of the first example embodiment. The movement from the reciprocating element 5a is transferred to rods 5r in the power generation device 5b through a bracket 5t or a pressure plate 5s connected to the reciprocating element 5a.

In both figures 21a and 21b, the returns springs 5c are arranged underneath the power generation module 5 in return spring package 5o.

Figure 21c shows a variation of the power generation modules 5 example of figure 21b, where a return spring 5c is connected to the reciprocating element 5a and arranged on top of the power generation device 5b.

Figure 21d shows a variation of the example power generation module 5 of figure 21c, but with additional magnet-coil pairs in the power generation device 5b. This example is thus capable of generating more power than the example of figure 21c.

Figure 21e shows loadbearing modules 4 and power generation modules 5 comprising an example reciprocating element 5a according to figure 20g.

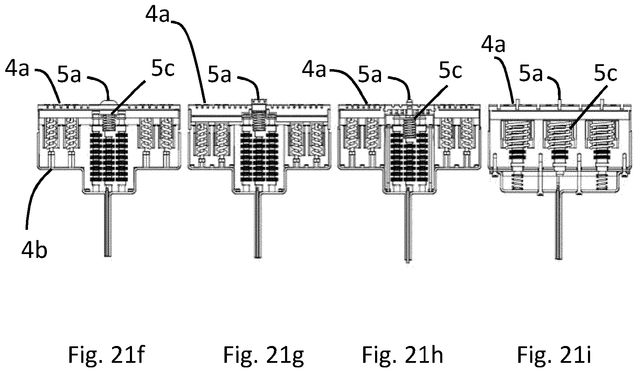

Figure 21f shows a variation of a power generation module 5 of figure 21e, but with additional magnet-coil pairs in the power generation device 5b.

Figure 21g shows loadbearing modules 4 and power generation modules 5 comprising an example reciprocating element 5a according to figure 20b.

Figure 21h shows loadbearing modules 4 and power generation modules 5 comprising a reciprocating element 5a according to figure 13-17.

Figure 21i shows a power generation module 5 according to figure 20h.

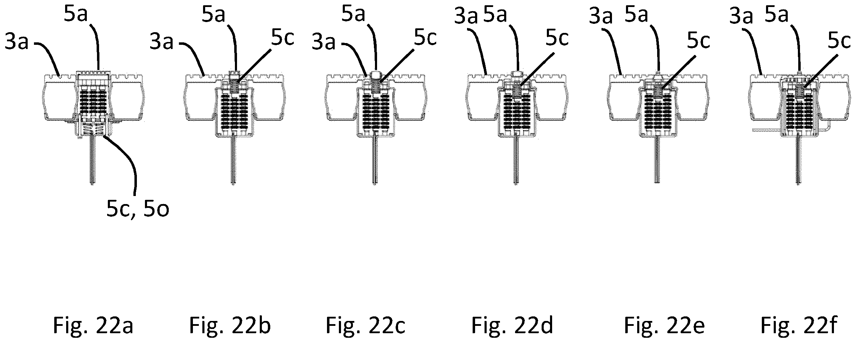

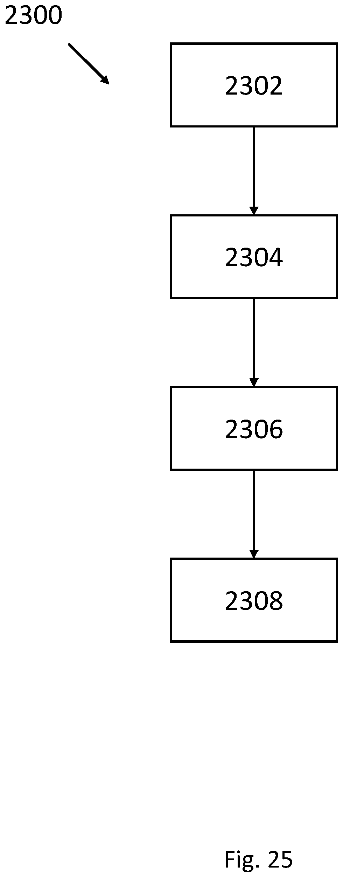

Figures 22a-22f show cross sections of different examples of arrangements of annular pneumatic tyres and power generation modules 5 for vehicle wheels 1 according to the invention.

Figure 22a shows annular pneumatic tyres 3a, 3b and a power generation module 5 according to figures 10-13.

Figure 22b shows annular pneumatic tyres 3a, 3b and a power generation module 5 similar to the one shown in figure 21d.

Figure 22c shows annular pneumatic tyres 3a, 3b and a power generation module 5 comprising a reciprocating element 5a according to figure 21f.

Figure 22d shows annular pneumatic tyres 3a, 3b and a power generation module 5 comprising a reciprocating element 5a according to figure 21e.

Figure 22e shows annular pneumatic tyres 3a, 3b and a power generation module 5 comprising a reciprocating element 5a according to figure 21d.

Figure 22f shows annular pneumatic tyres 3a, 3b and a power generation module 5 comprising a reciprocating element 5a according to figure 21c.

As a non-limiting summary of the examples of figures 21a-22f, the combinations are made up of a power generation modules 5 comprising either magnet-coil pairs where the magnet 5l can move relative the coil 5d or a piezoelectric element that compress and decompress during movement of the reciprocating element 5a and the parts to which it is attached.

The power generation module 5 can be arranged with one or more return springs 5c arranged either at the bottom of the power generation device 5b or at the top of the power generation device 5b. The return springs 5c are arranged to assist the reciprocating element 5a and the parts to which it is attached to return to the first state.

As an alternative to the return springs 5c, the reciprocating elements 5a can be placed on top of an annular pneumatic tube. The pneumatic tube will be compressed when the reciprocating elements 5a move radially inwards and when the reciprocating elements 5a are no longer in contact with the road's surface, the pneumatic tube will expand to assist the outward movement of the reciprocating elements 5a.

The power generation module 5 may comprise a power generation device 5b connected to a reciprocating element 5a that is either a thin element such as a rod, disc or similar, a rolling element, or a power generation tread segment tread segment. The reciprocating element 5a may be covered by the loadbearing tread 3.

The loadbearing tread 3 can be either made up of loadbearing tread segments 4a or one or more pneumatic tyres 3a, 3b.

The loadbearing tread 3 can extend across parts of the vehicle wheel's 1 width or across the entire vehicle wheel's 1 width.

The vehicle wheel 1 may comprise friction studs 11 to assist in increasing the grip during icy conditions.

A load sensor may be installed in the vehicle wheel 1.

The rim structure 2 on which the loadbearing tread 3 and the power generation modules 5 are installed can be made of for instance machined aluminium or steel sheets.

As mentioned, it is possible to combine the different embodiments with loadbearing treads comprising loadbearing tread segments and loadbearing treads comprising pneumatic tyres such that one loadbearing tread comprises loadbearing tread segments and the other loadbearing tread comprises a pneumatic tyre.

Figure 23 is a flowchart of a method for generating a voltage from the rotation of a vehicle wheel 1 according to the example embodiments of invention. Method step 2302: One or more power generation devices 5b are arranged in a rim structure 2, wherein each power generation device 5b comprises at least one electrically conducting coil with at least one magnet 5l arranged inside the coil, and where one or more reciprocating elements 5a each is connected to a respective power generation device 5b. Method step 2304: The reciprocating elements 5a are arranged such that in a first state the reciprocating elements 5a extend beyond an annular loadbearing tread 3 in a radial direction. During rotation of the vehicle wheel 1, method step 2306: The reciprocating elements 5a are moved radially inwards towards the rim structure 2 when the reciprocating elements 5a come in contact with the ground to a second state such that the reciprocating elements 5a become at least flush with the annular loadbearing tread 3. During transition between the first state and the second state or between the second state and the first state, method step 2308: Power is generated from the one or more power generation devices 5b by the movement of each reciprocating elements 5a radially inwards towards the rim structure 2 or outwards away from the rim structure 2 thereto causing the at least one magnet 5l or the at least one electrically conducting coil to move relative the other during the transition between the first state and the second state and/or between the second state and the first state, thereby generating a voltage in the at least one electrically conducting coil.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules and systems. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

### References:

- 1.: Vehicle wheel
- 2.: Rim structure
- a.: Outer rim structure part
- b.: Inner rim structure part
- c.: Axial rim structure part
- d.: Assembly recess
- 3.: Annular loadbearing tread
- a.: First annular loadbearing tread
- b.: Second annular loadbearing tread
- 4.: Loadbearing module
- a.: Loadbearing tread segment
- b.: Mechanical dampener
- c.: Rubber surface
- d.: Protective barrier
- e.: Spring housing
- f.: Dampening springs
- g.: Spring seal
- h.: Inner gliding casings
- i.: Outer wear casings
- j.: Fastening nut
- k.: Mounting thread
- 5.: Power generation module
- a.: Protruding element
- b.: Power generation device
- c.: Return springs
- d.: Coils
- e.: Protective barrier
- f.: Protective cover
- g.: Upper bushing
- h.: Upper power generation device seal
- i.: Upper distance
- j.: Lower bushing
- k.: Lower power generation device seal
- l.: Magnets
- m.: Distance rings
- n.: Lower distance
- o.: Return spring package
- p.: Pressure mount
- q.: Mounting sockets
- r.: Rods
- s.: Pressure plate
- t.: Bracket
- u.: Damping springs
- 6.: Annular power generation tread
- 7.: Mounting holes
- 8.: Mounting fastening means
- 9.: Cable channels
- 10.: Cables
- 11.: Friction studs
- 12.: Assembly screws
- 13.: Annular sealing surface
- a.: Through holes
- 14.: Ground

## Claims

1. A vehicle wheel (1) comprising a rim structure (2), onto which rim structure (2) at least one annular loadbearing tread (3; 3a, 3b) is mounted, wherein at least one power generation device (5b) is mounted to the rim structure (2) closer to the rim structure (2) than the loadbearing tread (3; 3a, 3b) in a radial direction, wherein each power generation device (5b) comprises at least one electrically conducting coil (5d) with at least one magnet (5l) arranged inside the coil (5d) or a piezoelectric element, wherein one or more reciprocating elements (5a) each are connected to a respective power generation device (5b), wherein in a first state, the one or more reciprocating elements (5a) extend beyond the annular loadbearing tread (3; 3a, 3b) in a radial direction, and wherein in a second state, the reciprocating elements (5a) have moved radially inwards toward the rim structure (2) after coming into contact with the ground during rotation of the vehicle wheel (1) such that the reciprocating elements (5a) become at least flush with the annular loadbearing tread (3; 3a, 3b), wherein during transition between the first state and the second state and during transition between the second state and the first state respectively, each reciprocating elements (5a) moves radially inwards towards the rim structure (2) and moves radially outwards away from the rim structure (2) respectively, such that each power generation device (5b) generates electrical power from the radial movement of the reciprocating elements (5a) connected thereto causing the at least one magnet (5l) or the at least one electrically conducting coil (5d) to move relative the other or by causing the compression and relaxation of the piezoelectric element during the transition between the first state and the second state and/or between the second state and the first state, thereby generating a voltage in the at least one electrically conducting coil (5d) or the piezoelectric element.

2. A vehicle wheel (1) according to claim 1, wherein onto which rim structure (2) at least one annular power generation tread (6) comprising a plurality of power generation tread segments (5a) arranged to be movable in a radial direction relative the rim structure (2) is mounted, wherein the annular power generation tread (6) is arranged beside the annular loadbearing tread (3; 3a, 3b) in an axial direction of the vehicle wheel (1), wherein the power generation tread segments (5a) of the annular power generation tread (6) each are connected to a respective electrical power generation device (5b) arranged in the rim structure (2) and extend beyond the annular loadbearing tread (3; 3a, 3b) in a radial direction.

3. The vehicle wheel (1) according to claim 1 or 2, wherein the vehicle wheel (1) comprises at least one outer annular loadbearing tread (3a), at least one inner annular loadbearing tread (3b) and at least one central annular power generation tread (6), where the at least one central annular power generation tread (6) is mounted between the at least one outer annular loadbearing tread (3a) and the at least one inner annular loadbearing tread (3b) in an axial direction of the vehicle wheel (1).

4. The vehicle wheel (1) according to any one of claims 1-3, wherein the at least one electrically conducting coil (5d) or the at least one magnet (5l) arranged inside the coil (5d) of each power generation device (5b) is resiliently attached to the rim structure (2).

5. The vehicle wheel (1) according to any one of the preceding claims, wherein the power generation devices (5b) are electrically connected to a power consumer in the vehicle wheel (1) and/or in the vehicle on which the vehicle wheel (1) is mounted, wherein the power consumer in the vehicle wheel (1) is a compressor, and/or wherein the power consumer in the vehicle is an electric motor and/or an electric battery.

6. The vehicle wheel (1) according to any one of the preceding claims, wherein the tread segments of the annular power generation tread (6) are removably attached to the power generation device (5b).

7. The vehicle wheel (1) according to any one of the preceding claims, wherein each annular loadbearing tread (3; 3a, 3b) is a pneumatic tyre mounted to the rim structure (2).

8. The vehicle wheel (1) according to any one of claims 1-6, wherein each annular loadbearing tread (3; 3a, 3b) comprises loadbearing tread segments (4a), wherein each one of the loadbearing tread segments (4a) are connected to a mechanical dampener (4b) which in turn is attached to the rim structure (2).

9. The vehicle wheel (1) according to any one of the preceding claims, wherein the rim structure (2) comprises an outer rim structure part (2a) and an inner rim structure part (2b), wherein a portion of the inner rim structure part (2b) is arranged to fit inside the outer rim structure part (2a) and where the outer rim structure part (2a) and inner rim structure part (2b) are arranged to be fastened together.

10. The vehicle wheel (1) according to claim 9, wherein the outer annular tread is mounted to an outer annular tread portion of the outer rim structure part (2a), the central annular tread is mounted to a central annular tread portion of the outer rim structure part (2a) and the inner annular tread is mounted to an inner annular tread portion of the inner rim structure part (2b) or to an inner annular tread portion of the outer rim structure part (2a).

11. The vehicle wheel (1) according to any one of the preceding claims 8-10 when dependent on claims 2-6, wherein the annular loadbearing tread segments (4a) comprise a material with a lower coefficient of friction than the power generation tread segments (5a) of the annular power generation tread (6).

12. The vehicle wheel (1) according to any one of claims 8-13, wherein the loadbearing tread segments (4a) are removably attached to the mechanical dampeners (4b).

13. The vehicle wheel (1) according to any one of the preceding claims, wherein the vehicle wheel (1) is a vehicle wheel (1) for a car, a tractor, a truck, a motorcycle, a trailer or similar.

14. Vehicle comprising a vehicle wheel according to any one of the preceding claims.

15. Method for generating a voltage from the rotation of a vehicle wheel (1) according to any one of the preceding claims, wherein the method comprises:
- arranging one or more power generation devices (5b) in the rim structure (2), wherein each power generation device (5b) comprises at least one electrically conducting coil (5d) with at least one magnet (5l) arranged inside the coil (5d) or a piezoelectric element, and where one or more reciprocating elements (5a) each is connected to a respective power generation device (5b),
- arranging the reciprocating elements (5a) such that in a first state the reciprocating elements (5a) extend beyond the annular loadbearing tread (3; 3a, 3b) in a radial direction,
wherein during rotation of the vehicle wheel (1),
- moving the reciprocating elements (5a) radially inwards towards the rim structure (2) when the reciprocating elements (5a) come in contact with the ground to a second state such that the reciprocating elements (5a) become at least flush with the annular loadbearing tread (3; 3a, 3b), and
wherein during transition between the first state and the second state or between the second state and the first state,
- generating power from the one or more power generation devices (5b) by the movement of each reciprocating elements (5a) radially inwards towards the rim structure (2) or outwards away from the rim structure (2) thereto causing the at least one magnet (5l) or the at least one electrically conducting coil (5d) to move relative the other during the transition between the first state and the second state and/or between the second state and the first state, thereby generating a voltage in the at least one electrically conducting coil (5d) or the piezoelectric element.
